# EUROPÄISCHE PATENTSCHRIFT

(11) **EP 1 045 215 B1**
(45) Veröffentlichungstag und Bekanntmachung des Hinweises auf die Patenterteilung: **10.11.2004**
(21) Anmeldenummer: 00106673.7
(22) Anmeldetag: 29.03.2000
(51) Int. Cl.: F25J 3/00, B01D 5/00, B01D 53/00, F24F 3/14

(54) **Verfahren und Vorrichtung zur Kühlung eines Gasstroms**
Process and apparatus for cooling a gas stream
Procédé et dispositif pour le refroidissement d'un écoulement gazeux

(30) Priorität: 15.04.1999 DE 19917115
(43) Veröffentlichungstag der Anmeldung: 18.10.2000
(73) Patentinhaber: Messer Griesheim GmbH, 65933 Frankfurt am Main (DE)
(72) Erfinder: Herzog, Friedhelm, Dr., 47799 Krefeld (DE); Schulte, Martin, 47799 Krefeld (DE); Pengemann, Guido, 49828 Neuenhaus (DE); Terkatz, Stefan, 47807 Krefeld (DE)

(56) Entgegenhaltungen:
- DE-A- 2 229 757

## Beschreibung

Die Erfindung betrifft ein Verfahren und eine vorrichtung zur Kühlung eines Gasstroms, gemäß dem Oberbegriff des Anspruchs 1 und 8. So ein Verfahren und eine Vorrichtung sind aus der DE-A-2 229 757 bekannt.

Bei der Förderung von Gasströmen, insbesondere wenn diese mit Dämpfen beladen sind, sollte die Eintrittstemperatur, daß bedeutet die Ansaugtemperatur der Fördereinrichtung, möglichst niedrig sein, um die Fördereinrichtung einerseits zu schützen und andererseits die Förderleistung zu erhöhen. Durch den Betrieb der Fördereinrichtung wird die Temperatur der Gasströme wieder erhöht.

Da nachgeschaltete Systeme, wie eine Kryokondensationsanlage, zum Beispiel Cryosolv®-Anlage, zum optimalen Betrieb auch eine relativ niedrige Eintrittstemperatur benötigen, ist es notwendig, die Austrittstemperatur der Fördereinrichtung entsprechend zu erniedrigen. Nach dem Stand der Technik kann diese Aufgabe mit zwei Wärmetauschern gelöst werden, wobei ein erster Wärmetauscher zur Einstellung der Ansaugtemperatur dient und mit Hilfe eines zweiten Wärmetauschers die Austrittstemperatur aus der Fördereinrichtung erniedrigt wird.

Die oben genannte Vorrichtung weist den Nachteile auf, daß zwei Wärmetauscher verwendet werden, wodurch die Kosten der gesamten Anlage relativ hoch sind.

Der Erfindung liegt die Aufgabe zugrunde, die Nachteile des eingangs genannten Standes der Technik zu überwinden und ein Verfahren sowie eine Vorrichtung zu schaffen, bei dem der bei der Förderung von Gasströmen zwangsläufig entstehenden Wärmeeinfall auf technisch einfache und damit kostengünstige Weise kompensiert wird.

Die der Erfindung zugrunde liegende Aufgabe wird durch ein Verfahren zur Kühlung eines Gasstroms gelöst.

Der Begriff "Gasstrom" umfaßt nach der Erfindung alle gasförmigen Stoffströme, die darüber hinaus andere Bestandteile, wie zum Beispiel feste Stoffe, flüssige Stoffe oder Dämpfe, enthalten können.

Bei der Erfindung werden die Funktionen von mindestens einem Wärmetauscher vor und mindestens einem Wärmetauscher nach der Fördereinrichtung in mindestens zwei Teilen eines einzigen Wärmetauschers realisiert. Dadurch reduzieren sich die Apparatekosten erheblich.

Nach der Erfindung ist es vorgesehen, daß entstehendes Kondensat in dem Wärmetauscher an mindestens einem Kondensatablaß des ersten Teils und/oder des zweiten Teils des Wärmetauschers abgezogen wird.

Es ist nach der Erfindung vorgesehen, daß in einem Zwischenkreislauf zumindest ein Teilstrom des aus der Fördereinrichtung kommenden Gasstroms dem ersten Teil des Wärmetausches wieder zugeführt wird.

Nach der Erfindung wird in dem Zwischenkreislauf ein Teilstrom von 0 % bis 100 %, bezogen aus den Gesamt-Volumenstrom des Gasstroms, geführt. Es ist bei dieser Ausführungsform des Verfahrens von besonderem Vorteil, daß mit Hilfe des Zwischenkreislaufs zusätzlich eine Volumenstromregelung entsprechend der gewünschten Verfahrensweise erfolgen kann.

Erfindungsgemäß kondensieren durch die Kühlung in dem Wärmetauscher in dem Gasstrom enthaltende Dämpfe zumindest teilweise aus.

Nach der Erfindung ist es vorgesehen, daß der aus dem zweiten Teil des Wärmetauschers kommende Gasstrom einer Reinigungsvorrichtung zugeführt wird, mit deren Hilfe der Gasstrom gereinigt wird, wobei vorzugsweise der aus dem zweiten Teil des Wärmetauschers kommende Gasstrom durch eine Kryokondensation gereinigt wird. Die Kühlung und zumindest partielle Kondensation der in dem Stoffstrom enthaltenen Stoffe, zum Beispiel Dämpfe, ermöglicht einen verfahrenstechnisch und/oder energetisch günstigen Betrieb von nachgeschalteten Reinigungsvorrichtungen, vorzugsweise Kryokondensationsanlagen.

Erfindungsgemäß ist es ebenso vorgesehen, daß der aus dem zweiten Teil des Wärmetauschers kommende Gasstrom einem Abkühlkammer zugeführt wird, worin in dem Abkühlkammer befindliche Teile oder Stoffe abgekühlt werden.

Nach der Erfindung wird dem Wärmetauscher als Kühlmedium Kühlwasser, Kühlsole oder ein verdampfendes Kältemittel zur Kühlung des Gasstrom zugeführt. Als Quelle für das Kühlmedium können Lagertanks oder Kältemaschinen oder Kühltürme für Kühlwasser dienen. Das Kühlmedium und die Quelle werden entsprechend der gewünschten Kühlwirkung sowie nach den Gegebenheiten beim Einsatzort des Verfahrens gewählt. Mit Hilfe von Kühlwasser wird zum Beispiel eine Kühltemperatur von ca. 20 °C bis 30 °C erreicht. In der Regel können tiefere Temperaturen von ca. -40 °C bis ca. 0°C durch Einsatz einer Kältemaschine erzielt werden. Noch tiefere Temperaturen können durch die sehr hohe Kälteleistung von Anlagen mit einem verdampfenden Kältemittel gewährleistet werden. Unter dem Begriff verdampfende Kältemittel" sind insbesondere organische Stoffe oder deren Mischungen, wie Frigen, oder tiefkalte flüssige oder überkritische Gase, wie flüssiger Stickstoff, zu verstehen.

Die der Erfindung zugrunde liegende Aufgabe wird ferner durch eine Vorrichtung zur Kühlung eines Gasstroms gemäß Anspruch 8 gelöst.

Nach der Erfindung steht die zweite Verbindungsleitung über eine Stell- oder Regelarmatur in Verbindung mit einer dritten Verbindungsleitung zur Rückführung von zumindest einem Teilstrom des aus der Fördereinrichtung kommenden Gasstroms in den ersten Teil des Wärmetauschers. Stell- oder Regelarmaturen sind zum Beispiel Ventile, Schieber, Klappen oder Kugelhähne. Vorzugsweise wird hier ein 3-Wege-Ventil verwendet, wodurch eine Regelung des Teilstrom in dem Zwischenkreislauf von 0 % bis 100 % ermöglicht wird. Es können bevorzugt anstatt des technisch relativ aufwendigen und teuren 3-Wege-Ventils auch ein oder mehrere Einzelarmaturen, z.B. Einzelventile, eingesetzt werden, welche technisch einfacher und kostengünstiger sind. Bei Einsatz von Einzelarmaturen kann der Teilstrom im Zwischenkreislauf auf Werte von ca. 30 % bis ca. 100 % mit einem Einzelventil in der dritten Verbindungsleitung oder auf Werte von ca. 0 % bis ca. 70 % mit einem Einzelventil in der zweiten Verbindungsleitung eingestellt werden.

Erfindungsgemäß ist die Fördereinrichtung ein Kompressor, ein Gebläse oder eine Pumpe.

Die erfindungsgemäße Vorrichtung wird vorzugsweise verwendet zur Durchführung eines Verfahrens gemäß Anspruch 1.

Das erfindungsgemäße Verfahren wird nun durch ein Ausführungsbeispiel näher erläutert.

Ein Volumenstrom von ca. 20000 m³/h eines Gas aus einer Abkühlkammer, welches im wesentlichen aus Stickstoff besteht, wird mit Hilfe des erfindungsgemäßen Verfahrens durch einen Wärmetauscher mit zwei Teilen von einer Eintrittstemperatur von ca. 80 °C und einem Druck von ca. 50 mbar auf eine Austrittstemperatur von ca. 30 °C und einem Druck von ca. 250 mbar gebracht und zur Kühlung von Teilen in die Abkühlkammer rückgeführt. Das heiße Gas wird durch einen ersten Teil des Wärmetauschers, z.B. ein erstes Rohrbündel, mit Hilfe eines Gebläses gesaugt, wobei eine auf der Saugseite des Gebläses angeordnete Druckhaltevorrichtung, z.B. ein Druckreduzierventil und ein Überstromventil, den Saugdruck des Gebläses konstant auf ca. 20 bis 30 mbar einstellt. Auf der Druckseite des Gebläses wird der Kreislaufdruck auf ca. 350 bis 400 mbar begrenzt, z.B. durch ein Überstromventil. Steigt der Kreislaufdruck über diesen Wert an, so strömt überschüssiges Gas hier ab und wird abgeleitet, z.B. ins Freie. Auf der Druckseite des Gebläses strömt der Hauptgasstrom über einen zweiten Teil des Wärmetauschers, z.B. ein zweites Rohrbündel, um im wesentlichen die durch das Gebläse in den Kreislauf eingebrachte Wärme abzuführen. Die am Austritt dieses zweiten Teils des Wärmetauschers erreichte Gastemperatur ist abhängig von der Kühlleistung des Kältemediums. Bei einer Verwendung von Kühlwasser und bei einer Kühlwassertemperatur von ca. 25 °C wird hier eine Temperatur des Gases von ca. 30 °C erreicht. Das gekühlte Gas wird dann der Abkühlkammer wieder zugeführt. Über einen Zwischenkreislauf wird z.B. bei einer Abregelung des Volumenstroms des zugeführten Gases durch eine parallel zu Gebläse und erstem Teil des Wärmetauschers geschaltete Armatur und Zwischenleitung die in der Abkühlkammer nicht benötigte Gasmenge zur Saugseite der Anlage zurückgeführt. Dadurch wird vermieden, daß das Gebläse gegen geschlossene Armaturen fördert und sich überhitzt. Darüber hinaus kann so der Volumenstrom des Gases geregelt werden. Durch einen geringen Überdruck des Gases in der Anlage wird erreicht, daß bei geringfügigen Leckkagen keine Umgebungsluft in das System eindringen kann. Um den Kältemediumstrom möglichst gering zu halten sind der erste und zweite Teil des Wärmetauschers in Reihe geschaltet. Gegenüber dem eingangs beschriebenen Verfahren nach dem Stand der Technik mit zwei Wärmetauschern konnten mit der erfindungsgemäßen Verfahren und der technisch relativ einfach zu realisierenden Anlage bei vergleichbarer Kühlleistung die Wärmetauscherkosten um ca. 30 % reduziert werden.

Die erfindungsgemäße Vorrichtung wird nun beispielhaft anhand einer Abbildung (Fig.) näher erläutert.

Die Fig. zeigt den erfindungsgemäßen Wärmetauscher und die Fördereinrichtung.

Der Wärmetauscher 1 weist zwei Teile 2,3 auf. Dem ersten Teil 2 des Wärmetauschers 1 wird über eine Eingangsleitung 4 der Gasstrom zugeführt. Über eine erste Verbindungsleitung 5 wird der Gasstrom aus dem ersten Teil 2 des Wärmetauschers 1 durch eine Fördereinrichtung 6 gesaugt und der Gasstrom wird aus der Fördereinrichtung 6 über zweite Verbindungsleitungen 7,8 weggeführt und dem zweiten Teil 3 des Wärmetauschers 1 zugeführt. Im Wärmetauscher 1 entstehendes Kondensat wird hier jeweils am Kopfende 9,10 des ersten bzw. des zweiten Teils 2,3 des Wärmetauschers 1 abgezogen, z.B. über Leitungen 11,12 durch Siphon-Systeme 13,14. Der Wärmetauscher 1 kann liegend, stehend oder vorzugsweise schräg aufgestellt werden und kann für bestimmte Anwendungsfälle vorteilhaft in Strömungsrichtung des Gasstromes geneigt sein, damit das Kondensat problemlos in Richtung der Kopfenden 9,10 des entsprechenden Teils 2,3 des Wärmetauschers 1 abfließen kann. Für andere Anwendungsfälle kann mindestens ein Konsatablaß 11, 12, 13, 14 auch an anderer Stelle bzw. Stellen des Wärmetauschers 1 angeordnet werden. Entsteht bei anderen Anwendungen keine oder nur eine sehr geringe Menge an Kondensat, so kann für diese Prozesse auf einen Kondensatablaß 11, 12, 13, 14 auch ganz verzichtet werden. Um den Volumenstrom des Abgases regeln zu können, kann ein Teil des Abgasstromes über ein der Fördereinrichtung 6 nachgeschaltetes Bypass-System 15, 16 in den ersten Teil 2 des Wärmetauschers 1 rückgeführt werden. Dazu steht hier ein 3-Wege-Stellventil 15 in Verbindung mit den Leitungen 7, 8 und in Verbindung mit einer dritten Verbindungsleitung 16 zur Rückführung von zumindest einem Teilstrom des aus der Fördereinrichtung 6 kommenden Gasstroms in den ersten Teil 2 des Wärmetauschers 1. Der Abgasstrom verläßt den Wärmetauscher 1 über Leitungen 17, 18, wobei der Abgasstrom durch Leitung 17 hier einer Reinigungsvorrichtung 19 zugeführt wird und nach erfolgter Reinigung in der Reinigungsvorrichtung 19 über Leitung 18 abgeleitet werden kann. Dem Wärmetauscher 1 wird über Anschlußstutzen 20, 21 und daran angeschlossene Leitungen 22, 23 ein verdampfendes Kühlmedium, vorzugsweise ein tiefkaltes Gas wie flüssiger Stickstoff, zugeführt bzw. wieder abgeführt. Die Leitungen 22, 23 sind mit einer Quelle 24 für das Kühlmedium, z.B. Tank für flüssigen Stickstoff, verbunden.

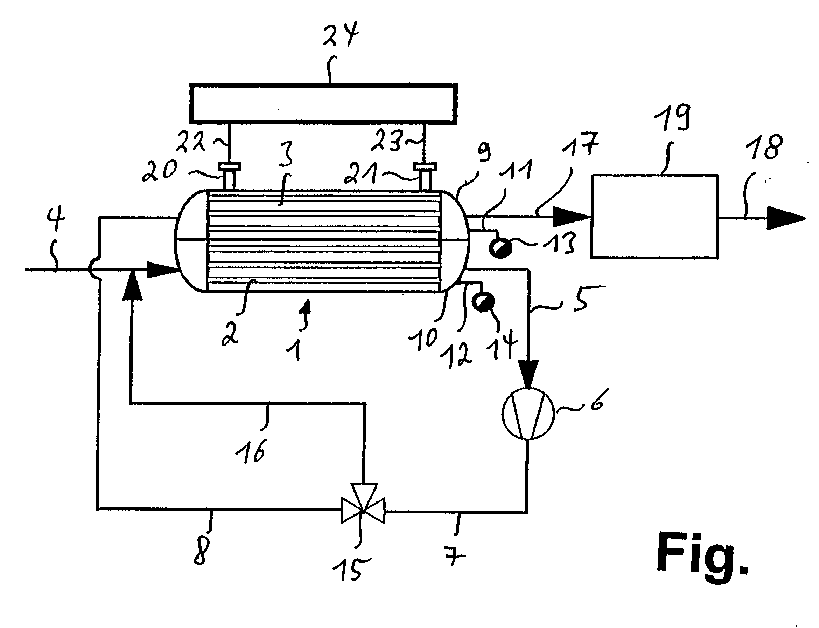

## Patentansprüche

1. Verfahren zur Kühlung eines Gasstroms, bei welchem der Gasstrom einem Wärmetauscher (1) und einer Fördereinrichtung (6) zugeführt wird, wobei der Gasstrom zunächst mindestens einem ersten Teil (2) des Wärme-tauschers (1) zugeführt wird und darin gekühlt wird und anschließend der Fördereinrichtung (6) zugeführt wird und danach der aus der Fördereinrichtung (6) kommende Gasstrom mindestens einem zweiten Teil (3) des Wärmetauschers (1) zugeführt und darin gekühlt wird, **dadurch gekennzeichnet, daß** in einem Zwischenkreislauf zumindest ein Teilstrom des aus der Fördereinrichtung (6) kommenden Gasstroms dem ersten Teil (2) des Wärmetausches (1) wieder zugeführt wird und in dem Zwischenkreislauf ein Teilstrom von 0% bis 100 %, bezogen auf den Gesamt-Volumenstrom des Gasstroms, geführt wird.

2. Verfahren nach Anspruch 1, **dadurch gekennzeichnet, daß** entstehendes Kondensat in dem Wärmetauscher (1) an mindestens einem Kondensatablaß (11, 12, 13, 14) des ersten Teils (2) und/oder des zweiten Teils (3) des Wärmetauschers (1) abgezogen wird.

3. Verfahren nach Anspruch 1 oder 2, **dadurch gekennzeichnet, daß** durch die Kühlung in dem Wärmetauscher (1) in dem Gasstrom enthaltende Dämpfe zumindest teilweise kondensieren.

4. Verfahren nach einem der Ansprüche 1 bis 3, **dadurch gekennzeichnet, daß** der aus dem zweiten Teil (3) des Wärmetauschers (1) kommende Gasstrom einer Reinigungsvorrichtung (19) zugeführt wird, mit deren Hilfe der Gasstrom gereinigt wird.

5. Verfahren nach Anspruch 4, **dadurch gekennzeichnet, daß** der aus dem zweiten Teil (3) des Wärmetauschers (1) kommende Gasstrom durch eine Kryokondensation gereinigt wird.

6. Verfahren nach einem der Ansprüche 1 bis 5, **dadurch gekennzeichnet, daß** der aus dem zweiten Teil (3) des Wärmetauschers (1) kommende Gasstrom einer Abkühlkammer zugeführt wird, worin in der Abkühlkammer befindliche Teile oder Stoffe abgekühlt werden.

7. Verfahren nach einem der Ansprüche 1 bis 6, **dadurch gekennzeichnet, daß** dem Wärmetauscher (1) als Kühlmedium Kühlwasser, Kühlsole oder ein verdampfendes Kältemittel zur Kühlung des Gasstrom zugeführt wird.

8. Vorrichtung zur Kühlung eines Gasstroms mit einer Fördereinrichtung (6) und einem Wärmetauscher (1), wobei der Wärmeaustauscher (1) aus mindestens zwei Teilen (2, 3) besteht, wobei mindestens der erste Teil (2) des Wärmetauschers (1) eine Eingangsleitung (4) zur Zuführung des Gasstroms sowie eine erste Verbindungsleitung (17) zur Wegleitung des Gasstroms aus dem ersten Teil (2) des Wärmetauschers (1) sowie eine Zuführung (5) in die Fördereinrichtung (6) aufweist, wobei aus der Fördereinrichtung (6) über eine zweite Verbindungsleitung (7, 8) der Gasstrom weggeführt wird und mindestens einem zweiten Teil (3) des Wärmetauschers (1) zugeführt wird, **dadurch gekennzeichnet, daß** die zweite Verbindungsleitung (7, 8) über eine Stell- oder Regelarmatur (15) in Verbindung steht mit einer dritten Verbindungsleitung (16) zur Rückführung von zumindest einem Teilstrom des aus der Fördereinrichtung (6) kommenden Gasstroms in den ersten Teil (2) des Wärmetauschers (1).

9. Vorrichtung nach Anspruch 8,
**dadurch gekennzeichnet,**
**daß** die Fördereinrichtung (6) ein Kompressor, ein Gebläse oder eine Pumpe.

10. Verwendung einer Vorrichtung nach Anspruch 8 zur Durchführung eines Verfahrens nach Anspruch 1.

## Claims

1. Process for cooling a gas stream, in which the gas stream is fed to a heat exchanger (1) and a delivery device (6), the gas stream first of all being fed to at least one first part (2) of the heat exchanger (1) and being cooled therein, and then being fed to the delivery device (6), and then the gas stream coming out of the delivery device (6) being fed to at least one second part (3) of the heat exchanger (1) and cooled therein, **characterized in that** in an intermediate cycle at least a part-stream of the gas stream coming out of the delivery device (6) is fed back to the first part (2) of the heat exchanger (1), and a part-stream amounting to from 0% to 100%, based on the total volumetric flow of the gas stream, is routed through the intermediate cycle.

2. Process according to Claim 1, **characterized in that** condensate which is formed in the heat exchanger (1) is extracted at at least one condensate outlet (11, 12, 13, 14) of the first part (2) and/or of the second part (3) of the heat exchanger (1).

3. Process according to Claim 1 or 2, **characterized in that** the cooling in the heat exchanger (1) causes vapours which are present in the gas stream to at least partially condense.

4. Process according to one of Claims 1 to 3, **characterized in that** the gas stream coming out of the second part (3) of the heat exchanger (1) is fed to a purification apparatus (19), with the aid of which the gas stream is purified.

5. The process as claimed in Claim 4, **characterized in that** the gas stream coming out of the second part (3) of the heat exchanger (1) is purified by cryogenic condensation.

6. Process according to one of Claims 1 to 5, **characterized in that** the gas stream coming out of the second part (3) of the heat exchanger (1) is fed to a cooling chamber, in which parts or substances that are present in the cooling chamber are cooled.

7. Process according to one of Claims 1 to 6, **characterized in that** cooling water, cooling brine or an evaporating refrigerant is fed to the heat exchanger (1) as a cooling medium to cool the gas stream.

8. Apparatus for cooling a gas stream, having a delivery device (6) and a heat exchanger (1), the heat exchanger (1) comprising at least two parts (2, 3), at least the first part (2) of the heat exchanger (1) having an entry line (4) for supplying the gas stream and a first connection line (17) for guiding the gas stream out of the first part (2) of the heat exchanger (1), and a feed (5) into the delivery device (6), the gas stream being routed out of the delivery device (6) via a second connection line (7, 8) and being fed to at least one second part (3) of the heat exchanger (1), **characterized in that** the second connection line (7, 8) is in communication, via a setting or control fitting (15), with a third connection line (16) for returning at least a part-stream of the gas stream coming out of the delivery device (6) to the first part (2) of the heat exchanger (1).

9. Apparatus according to Claim 8, **characterized in that** the delivery device (6) is a compressor, a fan or a pump.

10. Use of an apparatus according to Claim 8 for carrying out a process according to Claim 1.

## Revendications

1. Procédé de refroidissement d'un courant gazeux, dans lequel le courant gazeux est acheminé à un échangeur de chaleur (1) et à un dispositif de transport (6), le courant gazeux étant d'abord acheminé au moins à une première partie (2) de l'échangeur de chaleur (1) et y étant refroidi et étant ensuite acheminé au dispositif de transport (6) et ensuite, le courant gazeux sortant du dispositif de transport (6) étant acheminé au moins à une deuxième partie (3) de l'échangeur de chaleur (1) et y étant refroidi, **caractérisé en ce que** dans un circuit intermédiaire, au moins un courant partiel du courant gazeux sortant du dispositif de transport (6) est acheminé à nouveau à la première partie (2) de l'échangeur de chaleur (1) et un courant partiel de 0% à 100%, par rapport au courant volumique total du courant gazeux, étant guidé dans le circuit intermédiaire.

2. Procédé selon la revendication 1, **caractérisé en ce que** le condensat se formant dans l'échangeur de chaleur (1) est extrait au niveau d'au moins une sortie de condensat (11, 12, 13, 14) de la première partie (2) et/ou de la deuxième partie (3) de l'échangeur de chaleur (1).

3. Procédé selon la revendication 1 ou 2, **caractérisé en ce que** les vapeurs contenues dans le courant gazeux se condensent au moins partiellement du fait du refroidissement dans l'échangeur de chaleur (1).

4. Procédé selon l'une quelconque des revendications 1 à 3, **caractérisé en ce que** le courant gazeux provenant de la deuxième partie (3) de l'échangeur de chaleur (1) est acheminé à un dispositif d'épuration (19) à l'aide duquel le courant gazeux est purifié.

5. Procédé selon la revendication 4, **caractérisé en ce que** le courant gazeux provenant de la deuxième partie (3) de l'échangeur de chaleur (1) est purifié par condensation cryogénique.

6. Procédé selon l'une quelconque des revendications 1 à 5, **caractérisé en ce que** le courant gazeux provenant de la deuxième partie (3) de l'échangeur de chaleur (1) est acheminé à une chambre de refroidissement, les parties ou substances se trouvant dans la chambre de refroidissement y étant refroidies.

7. Procédé selon l'une quelconque des revendications 1 à 6, **caractérisé en ce que** l'on achemine à l'échangeur de chaleur (1) sous forme de réfrigérant de l'eau de refroidissement, des sols de refroidissement ou un fluide frigorigène s'évaporant pour le refroidissement du courant gazeux.

8. Dispositif de refroidissement d'un courant gazeux comprenant un dispositif de transport (6) et un échangeur de chaleur (1), l'échangeur de chaleur (1) se composant d'au moins deux parties (2, 3), au moins la première partie (2) de l'échangeur de chaleur (1) présentant une conduite d'entrée (4) pour l'alimentation en courant gazeux ainsi qu'une première conduite de raccordement (17) pour l'évacuation du courant gazeux hors de la première partie (2) de l'échangeur de chaleur (1) ainsi qu'une alimentation (5) dans le dispositif de transport (6), le courant gazeux étant évacué hors du dispositif de transport (6) par le biais d'une deuxième conduite de raccordement (7, 8) et étant acheminé à au moins une deuxième partie (3) de l'échangeur de chaleur (1), **caractérisé en ce que** la deuxième conduite de raccordement (7, 8) est en liaison par le biais d'une robinetterie de commande ou de réglage (15) avec une troisième conduite de raccordement (16) pour la recirculation d'au moins un courant partiel du courant gazeux provenant du dispositif de transport (6) dans la première partie (2) de l'échangeur de chaleur (1).

9. Dispositif selon la revendication 8, **caractérisé en ce que** le dispositif de transport (6) est un compresseur, une soufflante ou une pompe.

10. Utilisation d'un dispositif selon la revendication 8 pour la mise en oeuvre d'un procédé selon la revendication 1.
